# EUROPEAN PATENT SPECIFICATION

(11) **EP 2 524 550 B1**
(45) Date of publication and mention of the grant of the patent: **04.03.2020**
(21) Application number: 10843336.8
(22) Date of filing: 15.01.2010
(51) Int. Cl.: H04W 56/00

(54) **UPLINK SYNCHRONIZATION PROCESSING**
AUFWÄRTSSYNCHRONISATIONSVERARBEITUNG
TRAITEMENT DE SYNCHRONISATION DE LIAISON MONTANTE

(43) Date of publication of application: 21.11.2012
(73) Proprietor: Telefonaktiebolaget LM Ericsson (publ), 164 83 Stockholm (SE)
(72) Inventor: LANGEREIS, Alexander, S-193 40 Sigtuna (SE); HUSS, Fredrik, S-174 55 Sundbyberg (SE)
(74) Representative: Zacco Sweden AB
(86) International application number: PCT/SE2010/050038
(87) International publication number: WO 2011/087416

(56) References cited:
- EP-A2- 2 101 538
- US-A1- 2009 111 445
- US-A1- 2009 129 330
- MOTOROLA: "Uplink Synchronization Maintenance and Timing Advance", 3GPP DRAFT; R1-071329 UL_TIMINGCONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. St. Julian; 20070403, 3 April 2007 (2007-04-03), XP050105281, [retrieved on 2007-04-03]
- 'Technical Specification, 3rd Generation Partnership Project; Technical Specification Group Radio Access Network; Evolved Universal Terrestrial Radio Access (E-UTRA), Medium Access Control (MAC) protocol specification (Release 9)' 3GPP TS 36.321 V9.1.0 December 2009, pages 1 - 45, XP050401617
- MOTOROLA: 'Uplink Synchronization Maintenance and Timing Advance' R1-071329, 3GPP TSG RAN1 #48BIS 26 March 2007 - 30 March 2007, ST. JULIAN'S, MALTA, pages 1 - 3, XP050105281
- SIEMENS AG: 'Description of the Timing Advance Mechanism for TDD' TSGR2#6(99)849 TSG-RAN WORKING GROUP 2 16 August 1999 - 20 August 1999, SOPHIA-ANTIPOLIS, pages 1 - 5, XP050113158

## Description

### TECHNICAL FIELD

The present invention generally enables data communication in a radio-based communication system, and relates in particular to achieving uplink synchronization for user equipment present in the communication system.

### BACKGROUND

In certain radio-based communication systems, such as the Long-Term Evolution (LTE) systems, uplink transmissions from all the user equipment (UEs) in a cell of a radio base station (RBS) need to be time aligned at the RBS antenna in order to maintain orthogonality between the transmissions from the different UEs. In more detail, a requirement for this uplink orthogonality to hold is that the signals transmitted from different UEs within the same subframe but within different frequency resources arrive approximately time aligned at the RBS. More specifically, any timing misalignment between the signals received from different UEs should fall within the cyclic prefix. As a consequence, the time alignment of the uplink is a prerequisite for scheduling the UEs since unaligned UEs may cause interference to transmissions from other UEs.

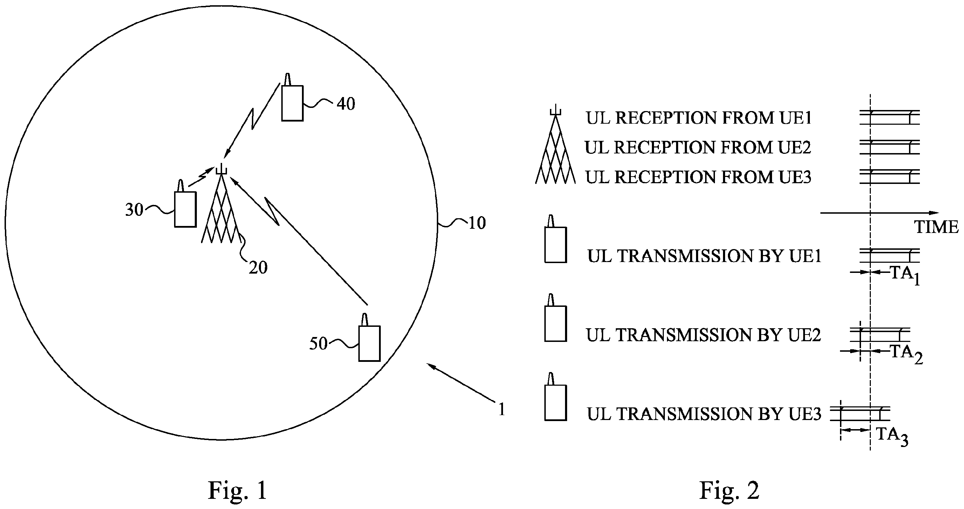

In order to achieve time alignment at the RBS antenna, the UEs need to transmit in advance of the expected reception time at the RBS. This is called timing advance in the art. Figs. 1 and 2 illustrate this concept. Fig. 1 illustrates a cell 10 of a RBS 20 in a communication system 1. The cell 10 currently houses three UEs 30, 40, 50 wanting to transmit uplink data to the RBS. In the upper part of Fig. 2 the uplink receptions from these three UEs (UE1 to UE3) are schematically illustrated to be time aligned.

The timing advance may be zero when the UE 30 (UE1) is very close to the RBS 20 and normally it increases when the UE moves away from the RBS 20. This is schematically illustrated in Fig. 2 with the first UE 30 having zero timing advance (TA₁), whereas the third UE 50 (UE3) present close to the cell border has a comparatively much larger timing advance (TA₃). The second UE 40 (UE2) is present somewhat in the middle of the cell area and consequently generally has a timing advance (TA₂) that is typically in between TA₁ and TA₃.

The timing advance is also influenced by reflections that the radio waves may do on their path to the RBS, also known as multipath propagation.

The timing advance mechanism in the RBS measures the timing error of the uplink data from the UE and uses Medium Access Control (MAC) control elements when ordering the UE to update its timing advance. When the UE receives such a timing alignment command it (re)starts its timing alignment timer and updates its timing advance. When the timing alignment timer expires, the UE is no longer considered to be uplink synchronized and its uplink timing is no longer aligned.

The MAC control element based timing alignment command has two main functions:
Keep the uplink transmission from all UEs in a cell time aligned at the RBS antenna in order to maintain orthogonality between users. The round trip time of the uplink transmission may change when the UE moves in the cell and this may require a change of the timing advance.

Avoid that the UE looses its uplink synchronization by avoiding that the timing alignment timer expires. For example, a stationary UE could be transmitting and/or receiving data for a long period of time, i.e. longer than the timing alignment timer. The UE does not need to receive time alignment commands to keep the uplink transmission time aligned. However, if the timing alignment timer expires, the UE is no longer considered uplink time aligned and can therefore not be scheduled anymore. The time alignment command is therefore used in this case to keep uplink synchronization even though no updating of the timing advance is required.

Thus, today time alignment commands are generated and transmitted by the RBS for UEs needing a timing advance update as determined from uplink timing error measurements and for UEs that need to be kept uplink synchronized even though no timing advance update might be required.

There is, though, a problem with the prior art techniques of transmitting these time alignment commands. Today they are transmitted once the RBS detects a need thereof based on at least one of the above two listed criteria. The time alignment command will occupy a downlink radio resource on the air interface. Additionally, the scheduling of the timing alignment command will also occupy a scheduling opportunity in the RBS. This can be a serious problem for a cell having multiple UEs and which thereby have to transmit quite many such time alignment commands. This significantly reduces the amount of downlink radio resources that can be used for transmitting other downlink data to the UEs and deplets the amount of scheduling opportunities. As a consequence the downlink data throughput will be reduced EP 2101538 A2 discloses a priori art approach to uplink synchronization.

### SUMMARY

Thus, there is a need for a solution of transmitting time alignment commands to user equipment but without the drawbacks of prior art in terms of draining downlink radio resources and scheduling opportunities and reducing downlink data throughput.

It is a general objective to provide an efficient uplink synchronization of user equipment.

It is a particular objective to achieve such uplink synchronization with reduced drainage of radio resources and/or scheduling opportunities.

These and objectives are met by embodiments as disclosed herein.

The invention is defined by the independent claims. Furthermore, the embodiments of the invention are those defined by the claims. Moreover, examples and descriptions, which are not covered by the claims are presented not as embodiments of the invention, but as background art or examples useful for understanding the invention.

### BRIEF DESCRIPTION OF THE DRAWINGS

The invention, together with further objects and advantages thereof, may best be understood by making reference to the following description taken together with the accompanying drawings, in which:
Fig. 1 is a schematic overview of a portion of a communication network in which embodiments can be implemented;
Fig. 2 schematically illustrates the principles of timing alignment in a communication network to achieve uplink synchronization;
Fig. 3 is a flow diagram illustrating an embodiment of a method of enabling uplink synchronization;
Fig. 4 schematically illustrates the principles of dividing a time alignment timer interval into multiple different sub-intervals according to an embodiment;
Figs. 5A and 5B illustrate a flow diagram of another embodiment of a method of enabling uplink synchronization;
Fig. 6 is a schematic block diagram of an embodiment of an uplink synchronization device;
Fig. 7 illustrates an implementation example of an uplink synchronization device; and
Fig. 8 illustrates a radio base station according to an embodiment.

### DETAILED DESCRIPTION

Throughout the drawings, the same reference numbers are used for similar or corresponding elements.

The present invention generally relates to data communication in wireless, radio-based communication systems and in particular to achieving uplink synchronization for user equipment present in such a communication system. The uplink synchronization is achieved according to a timing advance (TA) command algorithm that is utilized by the communication system to keep user equipment uplink synchronized. This novel technique has the advantage of reducing occupation of radio resources as compared to the prior art techniques.

Whereas the prior art techniques disclose transmission of TA commands to user equipment independent of any ongoing scheduling, embodiments as disclosed herein increases the likelihood of co-scheduling of TA commands and downlink transmission to the same user equipment and thereby a sharing of radio resources.

In the following, the embodiments will be described in more detail with reference to a Long-Term Evolution (LTE) system as an illustrative example of a radio-based communication system. The invention is though not limited thereto but can be applied to any radio-based communication system that uses TA commands to keep uplink transmissions from user equipment (UEs) in a cell of a radio base station (RBS) time aligned at the RBS antenna, for instance, in order to maintain orthogonality between the transmissions from the different UEs.

In general the problem of the prior art with scheduling the TA command on its own instead of adding it to Packet Data Shared Channels (PDSCH) is that additional radio resources are needed. Only a limited number of UEs can be scheduled each Transmission Time Interval (TTI) due to the limited number of Physical Downlink Control Channel (PDCCH) resources available. Hence, if a TA Medium Access Control (MAC) control element is scheduled on its own as in the prior art, no Downlink Synchronization Channel (DL-SCH) data transfer can be scheduled at that scheduling opportunity. As a consequence, the downlink data throughput is decreased.

Embodiments are therefore directed towards increasing the likelihood of scheduling a TA MAC control element, i.e. TA command, together with downlink data on the PDSCH. Such co-scheduling of the TA MAC control element together with the downlink data on the PDSCH relaxes the need for separate scheduling of TA MAC control elements, thereby saving scheduling opportunities that can be used for downlink transmissions to other UEs. The embodiments thereby significantly reduce the number of TA MAC control elements that are scheduled by themselves.

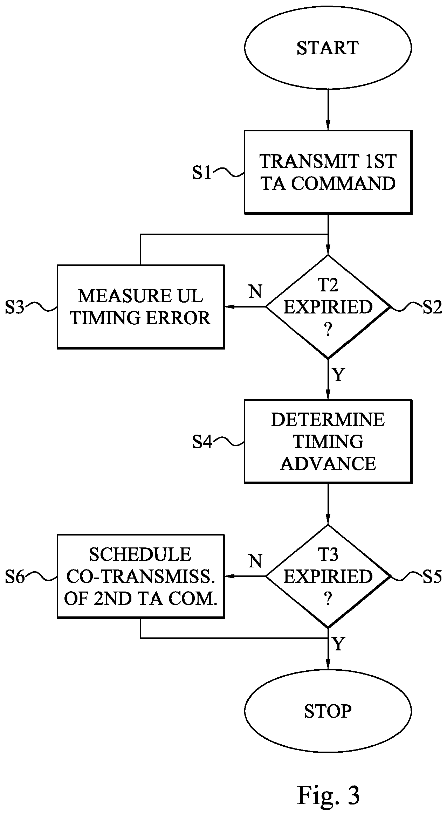

Fig. 3 is a flow diagram illustrating a method of enabling uplink synchronization of UE present in a cell served by a radio base station. The method starts in step S1, where a first timing alignment command or TA command, e.g. TA MAC control element, is transmitted to the UE. The TA command triggers a start or restart of a timing alignment timer (TAT) having an associated time interval. The first TA command, hence, has two main functions: it (re)starts the TAT with defined length of the associated time interval of the TAT and it comprises information of the timing advance to be utilized by the UE up until the end of the TAT to remain uplink synchronized. The length of the TAT, i.e. the time interval associated with the timing alignment timer, is preferably passed to the UE with either System Information or with dedicated Radio Resource Control (RRC) signaling. Thus, a notification indicating the time length of value of the TAT is typically signaled separate from the TA commands in the art. It is, though, possible to have an implementation that included this notification in the TA command if desired.

The first TA command could be the first TA command sent to the user equipment during a current communication session. In such a case, the TA command triggers a start of the TAT with a starting associated time interval. The TAT is a RRC parameter that can be set to different specified values. For more information of possible TAT values and setting TATs, reference is made to [1], the teaching of which with regard to Time Alignment Timer. Alternatively, the first TA command in step S1 can be an update TA command that triggers a restart of the TAT possibly with an updated associated time interval.

The generation and processing of TA commands is described in more detail in [2], the teaching of which with regard to MAC procedures and in particular maintenance of uplink time alignment.

According to the invention the time interval of the TAT is divided into multiple, i.e. at least two, defined sub-intervals or time windows. These sub-intervals are associated with different processing of the TA command algorithm as performed by the RBS.

One such time interval denoted the measuring time interval herein constitutes a defined sub-interval of the time interval of the TAT. This measuring time interval is employed by the RBS for measuring uplink timing of uplink data received from the UE with the purpose of identifying any error in the uplink timing, which necessitates an update of the TA currently assigned to the UE. Thus, the method continues from step S1 and continues to step S2, which investigates whether a defined time parameter T2 has expired. The time parameter T2 indicates the end of the measuring time window. If the time parameter T2 has not yet expired and the measuring time window of the TAT time interval is still active, the method continues to step S3, where the uplink timing of uplink data received from the UE is measured by the RBS. The loop of steps S2 and S3 is therefore preferably conducted during the whole sub-interval that constitutes the measuring time window. The uplink timing measurements performed in step S3 are preferably conducted on each uplink data transmission made by the UE to get as much measurement basis as possible. It is though possible to perform the measurements on only a single uplink transmission from the UE or a sub-portion of all the uplink transmissions occurring during the measuring time window, though with possibly lower accuracy in the determination of the uplink timing error.

During the measuring time window, the RBS will not send any TA command to the UE irrespective of any error of the uplink timing as determined by the RBS based on the conducted uplink timing error measurements. The reason is to avoid too frequent transmissions of TA commands which would introduce overhead and occupy radio resources. Generally, during the measuring time window, it is not necessary to adjust the uplink timing of the UE since the UE typically cannot have physically moved any significant distance since the last timing adjustment in step S1. Hence, the current TA as notified in the first TA command is a fairly accurate uplink timing parameter during the measuring time window.

Once the measuring time window ends and the time parameter T2 has expired, a timing advance for the UE is determined based on the measured uplink timing from step S3. It could then be possible that the currently assigned TA is still suitable as no significant error of the uplink timing has been detected for the UE from the measurement. In such a case, the RBS can set the TA command to zero indicting that the UE shall not adjust its uplink timing. However, if the UE has moved a significant distance towards or away from the RBS and/or the multipath propagation conditions in the cell has changed, it might be necessary to determine a different TA as compared to the currently assigned TA. This different TA can be a new TA value or be in the form of an update that is applied to the currently assigned TA to get the new correct TA value.

Upon the end of the measuring time window, a new defined sub-interval of the TAT time interval is started according to the embodiments, i.e. the scheduling time window. The scheduling time window is employed for scheduling a second TA command, e.g. TA MAC control element, to the UE. However, this second TA command is only scheduled if there is any downlink data scheduled for the UE. The second TA command will consequently be scheduled simultaneously as the downlink data. The TA MAC control element is very small and therefore it can be sent with almost no overhead to the scheduled downlink data.

The operation of the method therefore continues from step S4 to step S5. Step S5 investigates whether a time parameter T3 has expired. The time parameter T3 indicates the end of the scheduling time window, which therefore preferably occupies the sub-interval from T2 to T3 of the TAT time interval. If the parameter T3 has not been expired and the scheduling time window is open the method continues to step S6. Step S6 schedules transmission of the second TA command comprising a notification of the timing advance determined in step S4. This transmission is further scheduled together with a scheduled downlink data transmission to the UE. Thus, the TA MAC control element is then co-scheduled and preferably co-transmitted together with a PDSCH scheduling/transmission of downlink data during the scheduling time window.

As a result of this co-scheduling, no extra PDCCH radio resource are assigned for the transmission of the second TA command and remaining PDCCH and PDSCH resources on the air interface can be allocated to other UEs. Thus, all available air interface resources can be utilized.

The uplink timing measurements for a UE could be limited to only be performed during the measuring time window to thereby stop during the scheduling time window. Alternatively, the RBS continues to perform uplink timing measurements of uplink data received from the UE during the scheduling time window. In such a case, the determination of the timing advance in step S4 does not necessarily have to be conducted directly following the end of the measuring time window. Instead the determination can take place sometime during the scheduling time window up to the point of co-scheduling transmission of the TA command in step S6.

The important difference between the measuring time window and the scheduling time window, is though that no TA command is scheduled and transmitted during the measuring time window even if a need for a TA update is determined already during the measuring time window based on the measurements performed during this sub-interval.

In an embodiment, the RBS can be configured to always transmit a second TA command to the UE during the scheduling time window if there is any scheduled downlink data transmission to the UE during the scheduling time window. Thus, in such a case, the only criterion to determine is whether the second TA command can be co-scheduled together with a scheduled downlink data transmission during the scheduling time window.

In an alternative embodiment, the RBS determines whether there is a need for transmitting the second TA command to the UE. This need for transmitting the second TA command can be defined by the RBS based on various criteria. Firstly, if the uplink timing measurements conducted in step S3 indicates that there is an error in the uplink timing for the UE, an updated TA needs to be communicated to the UE. However, also an UE that does not have any significant error in the uplink timing as determined from the measurements of step S3 needs a second TA command in order to reset the TAT and prevent loss of uplink synchronization. Thus, if no second TA command is sent to such an UE, the TAT for that UE will expiry and the UE will release any semi-statically configured Physical Uplink Control Channel (PUCCH) resources for Channel Quality Indicator (CQI) and/or Scheduling Request (SR) that it may have. The UE further considers its uplink to no longer be to be time aligned. Prior to any uplink or downlink transmission, the UE needs to resynchronize its uplink using the Random Access (RA) procedure. Additionally, all Hybrid Automatic Repeat Request (HARQ) buffers will be flushed and the next transmission for each process will be regarded as the first transmission. The RBS will also stop scheduling the UE in uplink and downlink since the uplink of the UE is no longer considered to be time aligned.

Thus, the co-scheduling of the second TA command together with scheduled downlink data to the UE is performed in order to provide updated TA and/or to keep the UE time aligned by restarting the TAT. The latter criterion can, for instance, be determined by the RBS if the UE has transmitted any uplink data to the RBS from the (re)start of the TAT based on the first TA command and/or if the RBS has transmitted any downlink data to the UE from the (re)start of the TAT. If such data communication involving the UE has been conducted from the (re)start of the TAT, the RBS concludes that the UE still needs to be active and therefore needs a restart of the TAT even though no TA correction might be needed. However, if the RBS can conclude that there will be no more transmissions for a while, for instance if a Voice over Internet Protocol (VoIP) call has ended, it is no longer necessary to keep the UE time aligned and no second TA command need to be co-scheduled.

The latter embodiment of first determining a need for the second TA command before its co-scheduling and transmission has the additional advantage of preventing a new TAT restart with associated processing as defined in Fig. 3 when such a TAT restart and processing is not necessary. The former embodiment has the advantage of not requiring the additional determination of any need for a second TA command.

In an embodiment, the TAT time interval is thus divided into the preceding measuring time window and the following scheduling time window. In other embodiments, the TAT timer interval is divided into three, four or even five different defined sub-intervals. The additional sub-intervals are denoted timer setting time window, transmission time window and non-synchronized time window herein. The measuring time window and the scheduling time window can then be complemented with any one or two of these additional defined sub-interval or indeed all three additional sub-intervals.

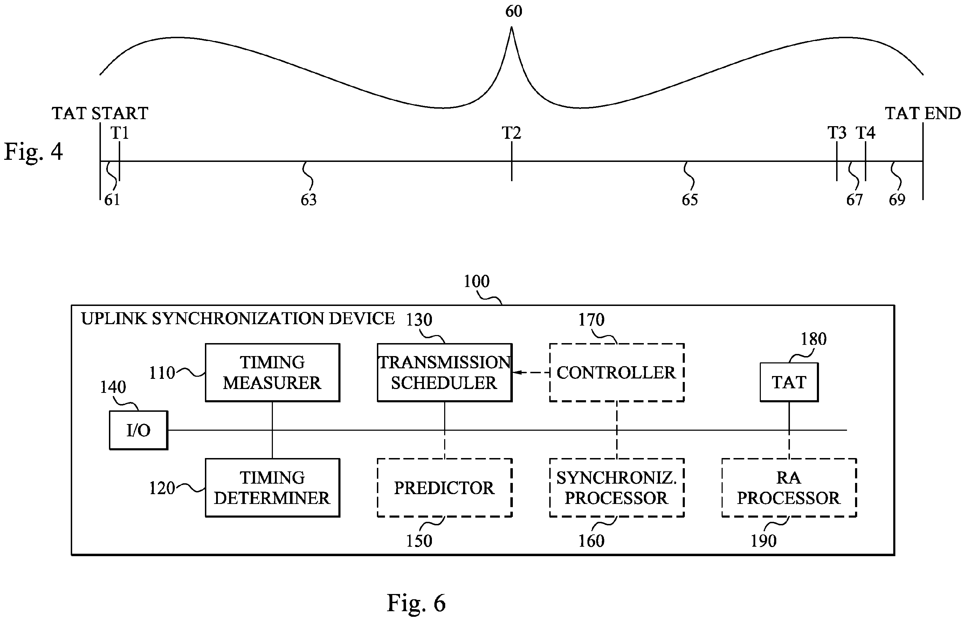

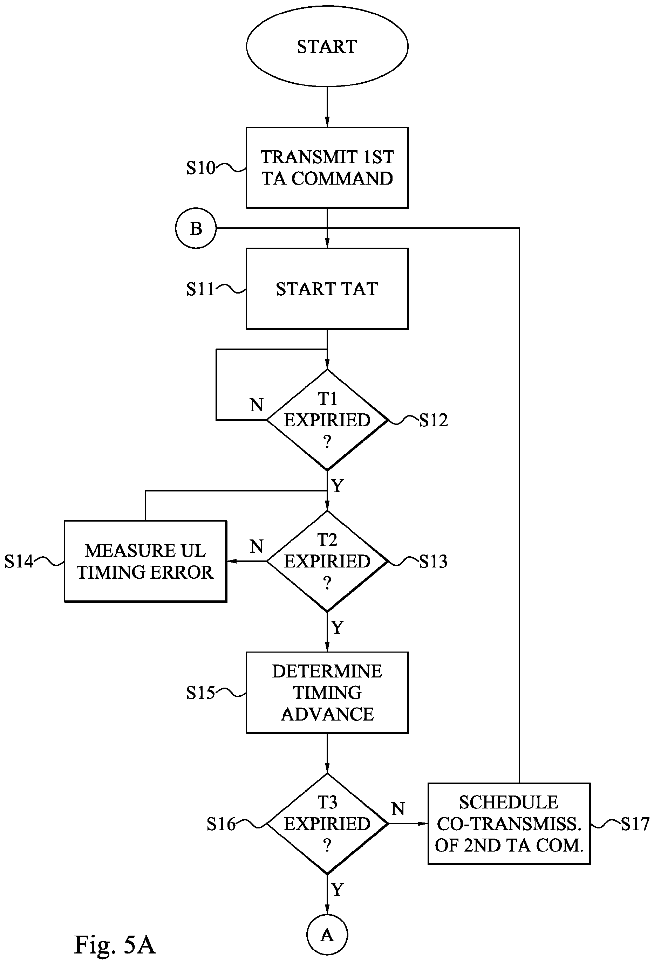

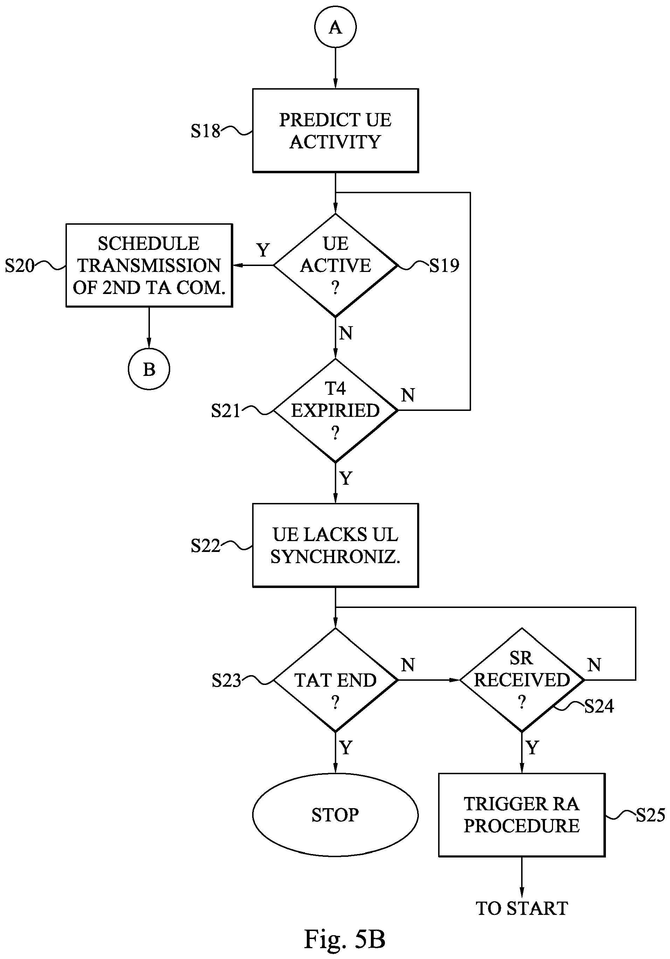

These additional sub-intervals will be further described with reference to Fig. 4 and the flow diagram of Figs. 5A and 5B illustrating an embodiment of the method of enabling uplink synchronization. The method starts in step S10 of Fig. 5A. This step S10 involves transmitting the first TA command to the UE triggering a (re)start of the TAT with an associated time interval and with a TA as defined in the first TA command. Step S10 basically corresponds to step S1 of Fig. 3 and is not further described herein. The transmission of the first TA command starts the TAT in step S11.

The timer setting time window 61 preferably starts at the start of the TAT time interval 60 and expires at a time parameter T1 constituting the start of the measuring time window 63. Thus, the timer setting time window 61 preferably immediately precedes the measuring time window 63 as illustrated in Fig. 4. The RBS preferably will not measure uplink timing of any uplink data received from the UE during the timer setting time window 61. The reason for postponing the start of the uplink timing measurements up to a short period from the start of the TAT time interval, i.e. at the start of the measuring time window 63, is that the UE may not yet have applied the TA as defined in the first TA command transmitted in step S10. An UE must adjust its timing advance according to the TA MAC control element within 6 ms after reception. This means that if the UE makes an uplink data transmission immediately following the start of the TAT time interval 60, it is possible that the UE has not yet applied the new TA for that uplink data transmission. Thus, postponing the uplink timing measurements to the start of the measuring time window 63 will increase the accuracy of the measurement of the uplink timing error that is used to decide how the UE shall adjust its uplink timing. The next step S12 consequently investigates whether the time parameter T1 has expired and the timer setting time window 61 has ended.

Generally, the time until the UE adjusts its timing advance from the reception of the first TA command is very short so the inaccuracy of not employing the timer setting time window 61 is quite small. If this inaccuracy is acceptable the timer setting time window 61 can thereby be omitted and the measuring time window 63 starts from the start of the TAT time interval 60.

The method continues from the optional step S12 to steps S13-S17, which are performed in the same way as steps S2-S6 in Fig. 3 and are therefore not described in more detail herein. Once a second TA command has been co-scheduled and co-transmitted together with a scheduled downlink data transmission to the UE in step S17, the method continues back to step S11, where the TAT is restarted based on a value as defined in the second TA command.

If the time parameter T3 has expired and the scheduling time window 65 has ended without any scheduled downlink data transmission for the UE, the RBS has not had the opportunity to send the second TA command to the UE during the scheduling time window 65. The method then continues from step S16 in Fig. 5A to step S18 in Fig. 5B. Step S18 predicts whether the UE needs to be uplink synchronized. Typically it is desired to keep the UE time aligned if there have been uplink or downlink transmissions since the last timing adjustment, i.e. since TAT start. The prediction of the UE need can therefore be based on a prediction of expected UE activity as determined based on past activity during the preceding part of the TAT time interval 60. Thus, if the UE has transmitted any uplink data during the measuring time window and/or the scheduling time window and/or if the RBS has transmitted any downlink data to the UE during the measuring time window, there is a significant likelihood that the UE has a need to remain uplink synchronized. It is also possible to perform the prediction in step S18 based on any data communication conducted in the preceding part of the current transmission time window 67. Thus, the predication can also be based on whether the UE has transmitted any uplink data during the transmission time window 67 and/or the RBS has transmitted any downlink data to the UE during the transmission time window 67.

If the UE is predicted to have a need to remain uplink synchronized as determined in step S19, the method continues to step S20. In step S20 the second TA command to the UE is scheduled during the transmission time window 67. The transmission time window 67 preferably starts at the end of the scheduling time window, i.e. expiry of the time parameter T3, and preferably ends at the time parameter T4 or at the end of the TAT time interval 60.

In clear contrast to the scheduling of the second TA command during the scheduling time window 65 in step S17, the scheduling of the second TA command during the transmission time window 67 is not limited to be performed together with a scheduled downlink data transmission to the UE. In clear contrast, the second TA command is scheduled in step S20 independent of any scheduled downlink data transmission to the UE. In a preferred embodiment, the independent scheduling of the second TA command is additionally scheduled as a high priority transmission of the second TA command to the UE during the transmission time window. The independent scheduling is preferably performed to guarantee that the second TA command is indeed transmitted to the UE before the expiry of the TAT time interval 60 in the case there is no downlink data transmission to which, the second TA command can suitable co-scheduled. The tagging of the transmission of the second TA command transmission as high priority implies that its transmission is given high priority throughout the communication system in order to increase the likelihood that the second TA command reaches the UE before the expiry of the TAT time interval 60.

Usage of the transmission time interval can be optional. Omission of this time interval implies that the TA MAC control element will never be scheduled without DL-SCH data. In this case a UE that has been transmitting and/or receiving data in the period between the start of the TAT timer interval and the time parameter T2 while not receiving DL-SCH data in the period between T2 and the time parameter T4 or the end of the TAT time interval 60 will not get a TA control element and its TAT will expire. The gain with such an embodiment is a less complex algorithm and avoiding the scheduling of TA MAC control elements when no PDSCH data needs to be transmitted for the UE. The disadvantage is though that there is an increased risk of UEs having to conduct more random accesses in order to once again be uplink synchronized.

If a second TA command is independently scheduled and transmitted to the UE during the transmission time window 67 in step S20, the method continues to step S11 in Fig. 5A, where the TAT is restarted.

If the time parameter T4 has expired and no second TA command has been transmitted to the UE, the RBS preferably regards, in step S22, the UE to lack uplink synchronization at the start of the non-synchronized time window 69 extending from the end of the transmission time window 67 and up to the end of the TAT time interval 60. Thus, during this last defined sub-interval of the TAT time interval 60, the RBS no longer considers the UE to be uplink time aligned. In this way it is avoided that the UE is scheduled while not sufficient time is available to receive or transmit the data before the expiration of the TAT. The RBS, hence, preferably prevents any uplink data transmission from the UE and prevents any downlink data transmission to the UE during the non-synchronized time window 69 until the completion of a random access procedure. Thus, in order to receive and/or transmit data, the UE has to be resynchronized using the random access procedure. The random access procedure can be initiated by the UE or the RBS.

For instance, in the case of a new uplink transmission from the UE, the UE may send a scheduling request on PUCCH before the TAT has expired, i.e. during the non-synchronized time window 69. The RBS can detect the scheduling request transmission in step S24 and triggers the random access procedure in step S25 by a PDCCH order as described in [3], the teaching of which in relation to such RBS-triggered random access procedure. Such a procedure is preferred since it avoids the delay until the TAT expires. The method then continues to start of Fig. 5A. In the alternative approach, the UE triggers the random access procedure by itself but then first at the expiry of the TAT.

In the case of a new downlink transmission, the RBS will trigger the random access procedure by a PDCCH order.

The advantage of using the time parameter T4 and the non-synchronized time window 69 is that it is avoided that the UE is scheduled while not sufficient time is available to receive or transmit the data before the expiration of the TAT. Additionally, triggering the random access procedure if a scheduling request is detected on the PUCCH during the non-synchronized time window 69 avoids any unnecessary scheduling delays.

The length of the sub-intervals and, thus, the values of the parameters T1-T4 can be specified as absolute time values or as percentage of the TAT. The advantage of setting the time parameters as a percentage of the TAT is that in that case, a change in the TAT does not require an adjustment of the time parameters. It is also possible to set some of the time parameters as absolute values, while others are asset as a percentage of the TAT.

Examples of illustrative but non-limiting values for the time parameters are presented below. These values have been defined in relation to a LTE system.

The timer setting time window 61, i.e. time parameter T1, is advantageously about 6 ms. The value 6 ms corresponds to the maximum time the UE can use for adjusting its TA in response to a received TA MAC control element.

The transmission time window 67 can be defined to have duration of about 20 ms. 20 ms is a suitable value since the transmission time window 67 should be sufficient to allow for the transmission of the TA command even if there are other UEs with data transmissions that are waiting to be scheduled. If Discontinuous Reception (DRX) is configured in the UE, the transmission time window 67 is preferably at least as long as the DRX cycle. DRX is a technique used in mobile communication in order to conserve the battery of the UE by turning of the UE receiver and entering a low power state during inactive phases.

The non-synchronized time window 69 is preferably about 40 ms. The non-synchronized time window 69 is preferably large enough to cover any HARQ retransmissions. The HARQ round trip time is typically 8 ms for a Frequency Division Duplex (FDD) system and for a Time Division Duplex (TDD) it varies some.

The time parameter T2 indicating the end of the measuring time window 63 and the start of the scheduling time window 65 preferably occurs at a point from 40 to 60 % of the TAT time interval 60, preferably at or around 50 % of the TAT time interval 60. Thus, if no additional sub-intervals 61, 67, 69 are employed, the measuring time window 63 and the scheduling time window 65 preferably each constitutes half the length of the TAT time interval 60.

The values of the time parameters and the length of the sub-intervals 61-69 could be fixed for a given UE or indeed for all UE communicating with a RBS and even fixed for the complete communication system. In an alternative approach, the time parameters and the sub-interval lengths could be adjustable based on the traffic type of a current communication session. In such a case, the RBS has access to different sets of time parameters/sub-interval lengths for different possible traffic types and selects one such set in connection with setting up the communication session based on the current traffic type.

Embodiments as disclosed herein minimizes the amount of scheduling opportunities where only a TA MAC control element is independently scheduled and thereby increases the obtained average downlink data throughput by reducing the occupation of radio resources and scheduling opportunities that are solely employed for TA MAC control element signaling.

Fig. 6 is a schematic block diagram of an uplink synchronization device 100 according to an embodiment. The uplink synchronization device 100 typically comprises a general input and output (I/O) unit 140 capable of conducting communication with other external devices. The I/O unit 140 can be a general communication interface for interacting with other devices that are arranged in wired connection with the uplink synchronization device 100. If such connections are instead implemented in terms of wireless connections, the I/O unit 140 is typically implemented as a transceiver with connected radio frequency (RF) antenna or as a separate transmitter and receiver unit having a common or dedicated RF antenna(s).

A timing measurer 110 or timing measuring unit is implemented in the uplink synchronization device 100 and is configured to measure uplink (UL) timing of UL data transmitted by a UE during the measuring time window. In an embodiment, the I/O unit 140 constitutes a receiving branch of a transceiver or a receiver that is implemented for directly receiving uplink data from the UE. In an alternative approach, the uplink synchronization device 100 is implemented in connection with a dedicated receiver or transceiver that forwards such received uplink data to the timing measurer 110 through the I/O unit 140.

The timing measurer 110 can be configured to start the UL timing measurements immediately at the (re)start of a TAT interval. In an alternative approach, the TAT time interval is started with the defined timer setting time window during which no UL timing error measurements are performed as previously described.

A timing determiner 120 or timing determining unit is preferably connected to the timing measurer 110 and is configured to determine a timing advance for the UE based on the uplink timing measured by the timing measurer 110. The timing determiner 120 also compiles a TA command comprising a notification of the determined timing advance. In an embodiment, the timing measurer 110 or another unit of the uplink synchronization device 100 compiles the notification of the TAT value or TAT time interval.

A transmission scheduler 130 or transmission scheduling unit is configured to schedule the transmission of the TA command to the UE. The transmission scheduler 130 schedules the transmission of the TA command together with a scheduled downlink (DL) data transmission to the UE during the previously discussed scheduling time window.

The I/O unit 140 then preferably co-transmits the TA command and the DL data to the user equipment or forwards the TA command to a dedicated transmitter or transceiver for effecting the co-transmission of the DL data. The I/O unit 140 is preferably also employed for transmission directly or indirectly of a previous TA command defining (re)start of the TAT that is currently running during the co-transmission of the current TA command and the DL data during the scheduling time window of the TAT time interval.

In an embodiment, the uplink synchronization device 100 comprises an optional predictor 150 or predicting unit that is configured to become operational if no DL data transmission is scheduled for the UE during the scheduling time window and, hence, no co-scheduling of the TA command and the DL data was possible. The predictor 150 then predicts whether the UE needs to be UL synchronized, preferably based on whether the UE has transmitted any UL data during the measuring time window, the scheduling time window and/or during the following transmission time window and/or the RBS has transmitted any DL data to the UE during the measuring time window and/or the transmission time window. If there is a predicted need for keeping the UE UL synchronized as determined by the predictor 150, the transmission scheduler 130 schedules transmission of the TA command to the UE during the transmission time window. As previously described, this scheduling is preferably performed independent of any scheduled DL data and is preferably scheduled at high priority.

In an embodiment, the uplink synchronization device 100 comprises a synchronization processor 160 configured to regard the UE to lack UL synchronization already at the start of the non-synchronized time window, i.e. before the expiration of the TAT time interval. A scheduler controller 170 thereby becomes operational to prevent the transmission scheduler 130 to schedule any UL data transmission form the UE or any DL data transmission to the UE during the non-synchronized time window until completion of a random access procedure.

Such a random access procedure can be triggered by an optional random access processor 190 based on reception of a scheduling request originating from the UE and received during the non-synchronized time window as previously described.

The uplink synchronization device 100 also comprises a respective TAT 180 for each UE that is currently UL synchronized. This means that once an UE and the RBS has completed a random access procedure, the UE is assigned a TAT 180 at the uplink synchronization device. The UE of course has its own TAT that is counted down synchronized with the TAT 180 of the uplink synchronization device 100.

The units 110 to 190 of the uplink synchronization device 100 can be implemented or provided as hardware or a combination of hardware and software.

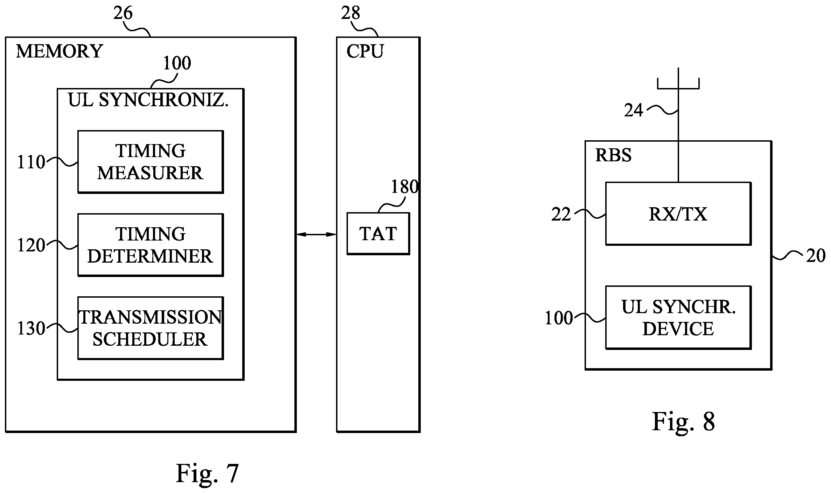

Fig. 7 is a schematic block diagram of another embodiment of the uplink synchronization device 100 implemented as a computer program product stored on a memory 26 and loaded and run on a general purpose or specially adapted computer, processor or microprocessor, represented by a central processing unit (CPU) 28 in the figure. The software includes computer program code elements or software code portions effectuating the operation of the timing measurer 110, the timing determiner 120 and the transmission scheduler 130 of the uplink synchronization device 100. The other optional but preferred devices as illustrated in Fig. 6 may also be implemented as computer program code elements stored in the memory 26 and executed by the CPU 28. The program may be stored in whole or part, on or in one or more suitable computer readable media or data storage means 26 such as magnetic disks, CD-ROMs, DVD disks, USB memories, hard discs, magneto-optical memory, in RAM or volatile memory, in ROM or flash memory, as firmware, or on a data server.

The TATs 180 available for the uplink synchronization device 100 can be implemented using one or more clock circuits of the CPU 28 as illustrated in the figure.

The uplink synchronization device is advantageously implemented in a RBS of a communication system as illustrated in Fig. 1. Fig. 8 is a schematic block diagram of a portion of such a RBS 20 housing the uplink synchronization device 100, such as implemented in Figs. 6 or 7. The RBS 200 preferably comprises a transmitter 22 configured to transmit DL data to the UE by means of a connected RF antenna 24 and a receiver 22 for receiving UL data from the UE using a connected RF antenna 24. The transmitter 22 and receiver 22 can be separate units of the RBS with a common or separate RF antenna circuitry 24. Alternatively, they represent the transmitting and receiving branch of a common transceiver 22 as illustrated in the figure. The RBS 20 also comprises the UL synchronization device 100 according to an embodiment.

The embodiments described above are to be understood as a few illustrative examples of the present invention. It will be understood by those skilled in the art that various modifications, combinations and changes may be made to the embodiments without departing from the scope of the present invention. In particular, different part solutions in the different embodiments can be combined in other configurations, where technically possible. The scope of the present invention is, however, defined by the appended claims.

### REFERENCES

[1] 3GPP TS 36.331 v8.7.0 (2009-09): 3rd Generation Partnership Project; Technical Specification Group Radio Access Network; Evolved Universal Terrestrial Radio Access (E-UTRAN) Radio Resource Control (RRC); Protocol specification
[2] 3GPP TS 36.321 v8.7.0 (2009-09): 3rd Generation Partnership Project; Technical Specification Group Radio Access Network; Evolved Universal Terrestrial Radio Access (E-UTRAN) Medium Access Control (MAC); Protocol specification
[3] 3GPP TS 36.212 v8.7.0 (2009-05): 3rd Generation Partnership Project; Technical Specification Group Radio Access Network; Evolved Universal Terrestrial Radio Access (E-UTRAN); Multiplexing and channel coding

## Claims

1. A method performed by an uplink synchronization device (100) comprised within a radio base station for enabling uplink synchronization of user equipment (30, 40, 50) present in a cell (10) served by said radio base station (20), said method comprising:
transmitting a first timing alignment command to said user equipment (30, 40, 50) triggering, based on said first timing alignment command, start of a timing alignment timer (180) of the user equipment (30, 40, 50) with defined length of an associated time interval (60);
**characterised by**:
measuring uplink timing of uplink data received from said user equipment (30, 40, 50) during a measuring time window (63) constituting a defined sub-interval of said time interval (60);
determining, based on said measured uplink timing, a timing advance for said user equipment (30, 40, 50);
co-scheduling transmission of a second timing alignment command comprising a notification of said timing advance together with a scheduled downlink data transmission to said user equipment (30, 40, 50) on a packet data shared channel, PDSCH, during a following scheduling time window (65) constituting a defined sub-interval of said time interval (60) and started upon an end of the measuring time window; and
co-transmitting said second timing alignment command and said downlink data to said user equipment (30, 40, 50) on the PDSCH during said scheduling time window (65).

2. The method according to claim 1, wherein said measuring time window (63) starts at the expiry of a defined timer setting time window (61) constituting a defined sub-interval of said time interval (60) and starting at the start of said time interval (60).

3. The method according to claim 2, wherein said timer setting time window (61) is about 6 ms.

4. The method according to any of the claims 1 to 3, wherein said measuring time window (63) ends and said scheduling time window (65) starts at a time point constituting from 40 to 60 % of said time interval (60), preferably 50 % of said time interval (60).

5. An uplink synchronization device (100) for enabling uplink synchronization of user equipment (30, 40, 50) present in a cell (10) served by a radio base station (20), said uplink synchronization device comprising:
a transmitter (22, 140) configured to transmit a first timing alignment command to said user equipment (30, 40, 50) triggering, based on said first timing alignment command, start of a timing alignment timer (180) of the user equipment (30, 40, 50) with defined length of an associated time interval (60);
**characterised by**:
a timing measurer (110) configured to measure uplink timing of uplink data received from said user equipment (30, 40, 50) during a measuring time window (63) constituting a defined sub-interval of the time interval (60);
a timing determiner (120) configured to determine a timing advance for said user equipment (30, 40, 50) based on said uplink timing measured by said timing measurer (110);
a transmission scheduler (130) configured to co-schedule transmission of a second timing alignment command comprising a notification of said timing advance together with a scheduled downlink data transmission to said user equipment (30, 40, 50) on a packet data shared channel, PDSCH, during a following scheduling time window (65) constituting a defined sub-interval of said time interval (60) and started upon an end of the measuring time window; and
a transmitter (22, 140) configured to retransmit said first timing alignment command to said user equipment (30, 40, 50) and co-transmit said downlink data to said user equipment (30, 40, 50) on the PDSCH during said scheduling time window (65).

6. The device according to claim 5, wherein said measuring time window (63) starts at the expiry of a defined timer setting time window (61) constituting a defined sub-interval of said time interval (60) and starting at the start of said time interval (60).

7. A radio base station (20) comprising:
a transmitter (22) configured to transmit downlink data to user equipment (30, 40, 50);
a receiver (22) configured to receive uplink data from said user equipment (30, 40, 50); and
an uplink synchronization device (100) according to any of the claims 5 to 6.

## Patentansprüche

1. Verfahren, das von einer Uplink-Synchronisationsvorrichtung (100) durchgeführt wird, die innerhalb einer Funkbasisstation umfasst ist, um eine Uplink-Synchronisation einer Benutzereinrichtung (30, 40, 50) zu ermöglichen, die in einer Zelle (10) vorhanden ist, die durch die Funkbasisstation (20) bedient wird, wobei das Verfahren umfasst:
Übertragen eines ersten Timing-Ausrichtungsbefehls an die Benutzereinrichtung (30, 40, 50), der basierend auf dem ersten Timing-Ausrichtungsbefehl den Start eines Timing-Ausrichtungs-Timers (180) der Benutzereinrichtung (30, 40, 50) mit definierter Länge eines zugeordneten Zeitintervalls (60) auslöst;
**gekennzeichnet durch:**
Messen des Uplink-Timings von Uplink-Daten, die von der Benutzereinrichtung (30, 40, 50) während eines Messzeitfensters (63) empfangen wurden, das ein definiertes Teilintervall des Zeitintervalls (60) bildet;
Bestimmen, basierend auf dem gemessenen Uplink-Timing, eines Zeitvorlaufs für die Benutzereinrichtung (30, 40, 50);
Co-Planungs-Übertragung eines zweiten Timing-Ausrichtungsbefehls, der eine Benachrichtigung des Zeitvorlaufs zusammen mit einer geplanten Downlink-Datenübertragung an die Benutzereinrichtung (30, 40, 50) auf einem gemeinsam genutzten Paketdatenkanal, PDSCH, während eines folgenden Planungszeitfensters (65) umfasst, das ein definiertes Teilintervall des Zeitintervalls (60) bildet und nach einem Ende des Messzeitfensters gestartet wird; und
Co-Übertragen des zweiten Timing-Ausrichtungsbefehls und der Downlink-Daten an die Benutzereinrichtung (30, 40, 50) auf dem PDSCH während des Planungszeitfensters (65).

2. Verfahren nach Anspruch 1, wobei das Messzeitfenster (63) mit dem Ablauf eines definierten Timing-Einstellungszeitfensters (61) startet, das ein definiertes Teilintervall des Zeitintervalls (60) bildet und mit dem Start des Zeitintervalls (60) startet.

3. Verfahren nach Anspruch 2, wobei das Timer-Einstellzeitfenster (61) ungefähr 6 ms beträgt.

4. Verfahren nach einem der Ansprüche 1 bis 3, wobei das Messzeitfenster (63) endet und das Planungszeitfenster (65) zu einem Zeitpunkt startet, der 40 bis 60 % des Zeitintervalls (60), vorzugsweise 50 % des Zeitintervalls (60) ausmacht.

5. Uplink-Synchronisationsvorrichtung (100) zum Ermöglichen der Uplink-Synchronisation einer Benutzereinrichtung (30, 40, 50), die in einer Zelle (10) vorhanden ist, die durch eine Funkbasisstation (20) bedient wird, wobei die Uplink-Synchronisationsvorrichtung umfasst:
einen Sender (22, 140), der konfiguriert ist, um einen ersten Timing-Ausrichtungsbefehl an die Benutzereinrichtung (30, 40, 50) zu übertragen, der basierend auf dem ersten Timing-Ausrichtungsbefehl den Start eines Timing-Ausrichtungs-Timers (180) der Benutzereinrichtung (30, 40, 50) mit definierter Länge eines zugeordneten Zeitintervalls (60) auslöst;
**gekennzeichnet durch:**
einen Timing-Messer (110), der konfiguriert ist, um das Uplink-Timing von Uplink-Daten zu messen, die von der Benutzereinrichtung (30, 40, 50) während eines Messzeitfensters (63) empfangen wurden, das ein definiertes Teilintervall des Zeitintervalls (60) bildet;
einen Timing-Bestimmer (120), der konfiguriert ist, um einen Zeitvorlauf für die Benutzereinrichtung (30, 40, 50) basierend auf dem von dem Zeitmesser (110) gemessenen Uplink-Timing zu bestimmen;
einen Übertragungs-Planer (130), der konfiguriert ist, um die Übertragung eines zweiten Timing-Ausrichtungsbefehls co-zuplanen, der eine Benachrichtigung des Zeitvorlaufs zusammen mit einer geplanten Downlink-Datenübertragung an die Benutzereinrichtung (30, 40, 50) auf einem gemeinsam genutzten Paketdatenkanal, PDSCH, während eines folgenden Planungszeitfensters (65) umfasst, das ein definiertes Teilintervall des Zeitintervalls (60) bildet und nach einem Ende des Messzeitfensters gestartet wird; und
einen Sender (22, 140), der konfiguriert ist, um den ersten Timing-Ausrichtungsbefehl an die Benutzereinrichtung (30, 40, 50) zu übertragen und die Downlink-Daten an die Benutzereinrichtung (30, 40, 50) auf dem PDSCH während des Planungszeitfensters (65) co-zu-übertragen.

6. Vorrichtung nach Anspruch 5, wobei das Messzeitfenster (63) mit dem Ablauf eines definierten Timing-Einstellungszeitfensters (61) startet, das ein definiertes Teilintervall des Zeitintervalls (60) bildet und mit dem Start des Zeitintervalls (60) startet.

7. Funk-Basisstation (20), die umfasst:
einen Sender (22), der konfiguriert ist, um Downlink-Daten an die Benutzereinrichtung (30, 40, 50) zu übertragen;
einen Empfänger (22), der konfiguriert ist, um Uplink-Daten von der Benutzereinrichtung (30, 40, 50) zu empfangen; und
eine Uplink-Synchronisationsvorrichtung (100) nach einem der Ansprüche 5 bis 6.

## Revendications

1. Procédé mis en œuvre par un dispositif de synchronisation en liaison montante (100) compris au sein d'une station de base radio pour permettre une synchronisation en liaison montante d'un équipement utilisateur (30, 40, 50) présent dans une cellule (10) desservie par ladite station de base radio (20), ledit procédé comprenant :
la transmission d'une première commande d'alignement temporel audit équipement utilisateur (30, 40, 50) déclenchant, sur la base de ladite première commande d'alignement temporel, le démarrage d'un temporisateur d'alignement temporel (180) de l'équipement utilisateur (30, 40, 50) avec une longueur définie d'un intervalle de temps associé (60) ;
**caractérisé par :**
la mesure d'une temporisation de liaison montante de données de liaison montante reçues depuis ledit équipement utilisateur (30, 40, 50) pendant une fenêtre temporelle de mesure (63) constituant un sous-intervalle défini dudit intervalle de temps (60) ;
la détermination, sur la base de ladite temporisation de liaison montante mesurée, d'une avance de temporisation pour ledit équipement utilisateur (30, 40, 50) ;
la co-planification de transmission d'une deuxième commande d'alignement temporel comprenant une notification de ladite avance de temporisation conjointement avec une transmission de données en liaison descendante planifiée audit équipement utilisateur (30, 40, 50) sur un canal partagé de données de paquet, PDSCH, pendant une fenêtre temporelle de planification suivante (65) constituant un sous-intervalle défini dudit intervalle de temps (60) et démarrée lors d'une fin de la fenêtre temporelle de mesure ; et
la co-transmission de ladite deuxième commande d'alignement temporel et desdites données de liaison descendante audit équipement utilisateur (30, 40, 50) sur le PDSCH pendant ladite fenêtre temporelle de planification (65).

2. Procédé selon la revendication 1, dans lequel ladite fenêtre temporelle de mesure (63) démarre à l'expiration d'une fenêtre temporelle de réglage de temporisateur définie (61) constituant un sous-intervalle défini dudit intervalle de temps (60) et démarrant au début dudit intervalle de temps (60).

3. Procédé selon la revendication 2, dans lequel ladite fenêtre temporelle de réglage de temporisateur (61) est d'environ 6 ms.

4. Procédé selon l'une quelconque des revendications 1 à 3, dans lequel ladite fenêtre temporelle de mesure (63) se termine et ladite fenêtre temporelle de planification (65) démarre à un moment constituant de 40 à 60 % dudit intervalle de temps (60), de préférence 50 % dudit intervalle de temps (60).

5. Dispositif de synchronisation en liaison montante (100) pour permettre une synchronisation en liaison montante d'un équipement utilisateur (30, 40, 50) présent dans une cellule (10) desservie par une station de base radio (20), ledit dispositif de synchronisation en liaison montante comprenant :
un émetteur (22, 140) configuré pour transmettre une première commande d'alignement temporel audit équipement utilisateur (30, 40, 50) déclenchant, sur la base de ladite première commande d'alignement temporel, le démarrage d'un temporisateur d'alignement temporel (180) de l'équipement utilisateur (30, 40, 50) avec d'une longueur définie d'un intervalle de temps associé (60) ;
**caractérisé par :**
un mesureur de temporisation (110) configuré pour mesurer une temporisation de liaison montante de données de liaison montante reçues dudit équipement utilisateur (30, 40, 50) pendant une fenêtre temporelle de mesure (63) constituant un sous-intervalle défini de l'intervalle de temps (60) ;
un déterminateur de temporisation (120) configuré pour déterminer une avance de temporisation pour ledit équipement utilisateur (30, 40, 50) sur la base de ladite temporisation de liaison montante mesurée par ledit mesureur de temporisation (110) ;
un planificateur de transmission (130) configuré pour co-planifier une transmission d'une deuxième commande d'alignement temporel comprenant une notification de ladite avance de temporisation conjointement avec une transmission de données en liaison descendante planifiée audit équipement utilisateur (30, 40, 50) sur un canal partagé de données de paquet, PDSCH, pendant une fenêtre temporelle de planification suivante (65) constituant un sous-intervalle défini dudit intervalle de temps (60) et démarrée lors d'une fin de la fenêtre temporelle de mesure ; et
un émetteur (22, 140) configuré pour transmettre ladite première commande d'alignement temporel audit équipement utilisateur (30, 40, 50) et co-transmettre lesdites données de liaison descendante audit équipement utilisateur (30, 40, 50) sur le PDSCH pendant ladite fenêtre temporelle de planification (65).

6. Dispositif selon la revendication 5, dans lequel ladite fenêtre temporelle de mesure (63) démarre à l'expiration d'une fenêtre temporelle de réglage de temporisateur définie (61) constituant un sous-intervalle défini dudit intervalle de temps (60) et démarrant au début dudit intervalle de temps (60).

7. Station de base radio (20) comprenant :
un émetteur (22) configuré pour transmettre des données de liaison descendante à un équipement utilisateur (30, 40, 50) ;
un récepteur (22) configuré pour recevoir des données de liaison montante depuis ledit équipement utilisateur (30, 40, 50) ; et
un dispositif de synchronisation en liaison montante (100) selon l'une quelconque des revendications 5 à 6.
